# EUROPEAN PATENT APPLICATION

(11) **EP 1 311 120 A2**
(43) Date of publication of application: **14.05.2003**
(21) Application number: 02023812.7
(22) Date of filing: 23.10.2002
(51) Int. Cl.: H04N 5/783

(54) **Method for implementing low-speed playback of a digital broadcast program**

(30) Priority: 09.11.2001 KR 2001069860
(71) Applicant: Humax Co., Ltd., Yougin City, Kyonggi-Do (KR)
(72) Inventor: Kim, Jong Soon, Seoul 156-090 (KR); Lee, Bang Hyun, Sungnam-si, Kyunggi-do, 463-500 (KR)
(74) Representative: Körner, Ekkehard, Dipl.-Ing.

(57) **Abstract**

A method that implements low-speed playback of a recorded digital broadcast program in a digital broadcast receiver, comprising the steps of (a) decoding and outputting a received broadcast program consisting of MPEG-encoded I-, P-, and B-pictures, simultaneously recording the received broadcast program, (b) responsive to a request for low-speed playback, extracting only I- and P-pictures from the recorded program and creating alternative pictures for B-pictures, beginning from the start position of the requested playback, (c) inserting intermediate pictures between the pictures in step (b), the number of the created intermediate pictures depending on the requested playback speed, and (d) decoding and outputting the stream of the pictures including the inserted intermediate pictures. The method in accordance with the present invention provides several advantages such as reduced computations and smooth slow motions at very low playback speeds.

## Description

### BACKGROUND OF THE INVENTION

### Field of the Invention

The present invention relates to a method for reproducing a recorded digital broadcast program at speeds lower than the recording speed in a digital broadcast receiver capable of recording received programs

### Description of the Related Art

With remarkable advancements in digital signal processing, Moving Picture Experts Group (MPEG) audio/video coding standard has emerged as a major technique for the transport of digital audio/video data such as movies. Along with the MPEG standard, the development of digital communication techniques have enabled digital broadcasts. The transitions from analog to digital broadcasts are presently underway based upon the MPEG standard in terrestrial, satellite, and cable broadcasts industries.

Digital broadcasts offer many advantages over its analog counterparts, which include superior audio/video quality for a given bandwidth, smaller bandwidth for a given image resolution, compatibility with computers and storage media, simultaneous broadcasts of multiple programs in a single channel, etc.

In digital broadcasts, a multitude of programs compressed according to the MPEG standard are multiplexed into a single transport stream comprising a series of transport packets (TPs) and transmitted in the form of a transport stream. A single transport stream transmitted through an RF channel, therefore, may contain a multitude of programs or sub-channels. A broadcast receiver at a viewer's location receives transmitted broadcast signals. If a program is selected, the receiver demultiplexes a transport stream containing the selected program and decodes TPs associated with the program, thereby retrieves video/audio signals of the selected program to be presented by a TV connected to the receiver.

Digital set-top box manufacturers recently released more sophisticated set-top boxes with recording capability. Such a set-top box contains a hard disk drive having a high storage capacity within it and is capable of recording a selected broadcast program on the hard disk drive, simultaneously playing the selected program. The recorded program can be reproduced at anytime by a user command.

A user sometimes needs low-speed playback of a recorded program so as to watch specific scenes in detail. In such a case, the decoding device maintains a normal decoding rate of 30 frames/sec but decodes the same video frame data several times to lower playback speed. For example, if 1/6 x speed playback is requested, the video data for a picture is repeatedly provided to the decoding device 6 times. As a result, the recorded program is reproduced 1/6 times as fast as the recording speed.

In an MPEG decoding system, a B-picture cannot be decoded in itself because a B-picture is encoded with reference to other I- and P-pictures. As a result, decoding of a B-picture always requires other I- and P-pictures and completing a video frame from a B-picture needs more computations than building a video frame from an I-picture or a P-picture. If a B-picture is inputted to the decoding device repeatedly, lots of computations should be executed within a given time bound. To perform such a large amount of computations, a high-speed processor should be used, which increases the manufacturing cost of the set-top box.

Also, if a new picture is decoded after the previous picture has been repeatedly decoded according to a given playback speed, there might be an abrupt change in the video output. As the required playback speed becomes lower, the change becomes more conspicuous and consequently it becomes more difficult to implement smooth slow motions.

### SUMMARY OF THE INVENTION

It is therefore an object of the present invention to provide a method that implements low-speed playback of a recorded program with a reduced number of calculations.

It is another object of the present invention to provide a method that allows smooth playback of a recorded program at speeds lower than the recording speed.

A method for low-speed playback of a broadcast program in accordance with the present invention comprises the steps of decoding and outputting a received broadcast program consisting of MPEG-encoded I-, P-, and B-pictures while recording the received broadcast program; extracting only I- and P-pictures, in response to a request for low-speed playback, from the recorded program and creating alternative pictures for B-pictures, beginning from a start position of the requested playback; inserting intermediate pictures between the extracted pictures such that the number of the created intermediate pictures is matched with the requested playback speed; and decoding and outputting the stream of the pictures including the inserted intermediate pictures.

Another method in accordance with the present invention constructs an intermediate picture by averaging the corresponding pixels of the two pictures between which the intermediate picture is to be inserted.

### BRIEF DESCRIPTION OF THE DRAWINGS

The accompanying drawings, which are included to provide a further understanding of the invention, illustrate the preferred embodiments of the invention, and together with the description, serve to explain the principles of the present invention.

In the drawings:
FIG. 1 is a block diagram of a digital broadcast receiver embodying the present invention;
FIGS. 2a and 2b are schematic diagrams illustrating the structure of index files containing picture information created in accordance with embodiments of the present invention;
FIG. 3 is a schematic diagram illustrating the procedure for searching for a requested low-speed playback interval with reference to an index file;
FIG. 4 is a schematic diagram illustrating a picture sequence to implement slow motions using the same picture data repeatedly in accordance with an embodiment of the present invention; and
FIGS 5a and 5b are schematic diagrams illustrating picture sequences to implement slow motions using the whole or part of averaged pictures in accordance with another embodiment of the present invention.

### DETAILED DESCRIPTION OF THE PREFERRED EMBODIMENTS

In order that the invention may be fully understood, preferred embodiments thereof will now be described with reference to the accompanying drawings.

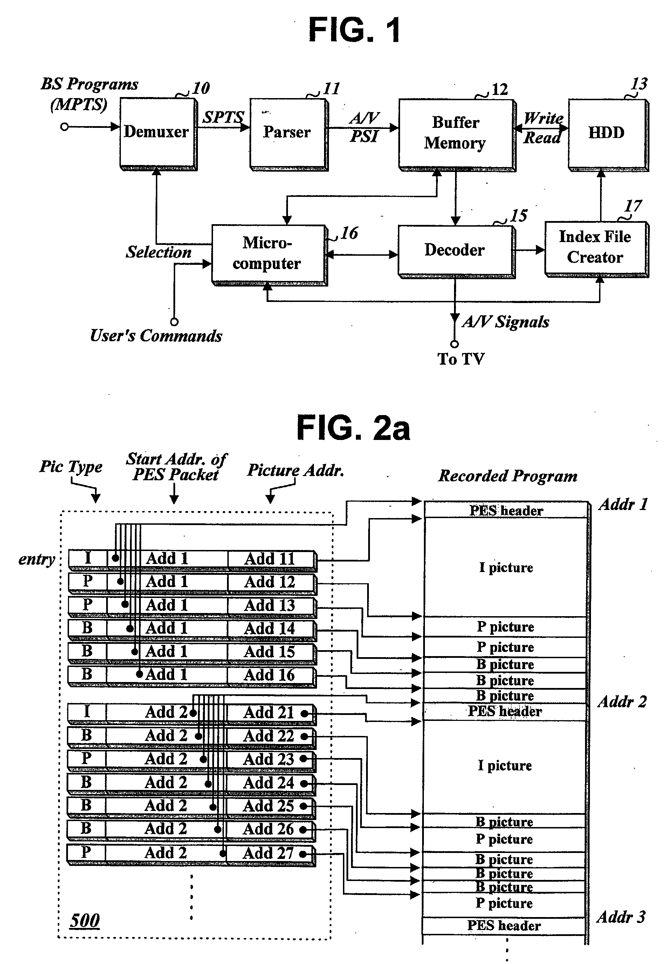

FIG. 1 depicts a block diagram of a digital broadcast receiver embodying the present invention. The broadcast receiver comprises a demultiplexer 10, a parser 11, a hard disk drive 13, a buffer memory 12, a decoder 15, an index file creator 17, and a microcomputer 16. The demultiplexer 10 demultiplexes a received multi-program transport stream (MPTS) to produce a single-program transport stream (SPTS) of a selected program. The single-program transport stream is separated into A/V packets and PSI packets by the parser 11. The hard disk drive 13 records a received program and relevant data. The buffer memory 12 temporarily stores PES packets outputted from the parser 11 before they are recorded on the hard disk drive 13. The decoder 15 decodes the A/V transport packets temporarily stored in the buffer memory 12 and thereby retrieves video and audio signals of the selected program. Also, the decoder 15 outputs the information on the types of decoded pictures to the index file creator 17. Using the types of decoded pictures, the index file creator 17 creates index information for accessing the recorded pictures and stores the index information as a file in the buffer memory 12 or on the hard disk drive 13. The microcomputer 16 controls each component of the broadcast receiver to perform playback of a recorded program at a speed requested by the user.

Assumed to have a storage capacity of 40 GB, the hard disk drive 13 theoretically can hold 330 minutes length of MPEG transport streams received at a rate of 16 Mbps.

In response to a user command for selecting a channel or a sub-channel, the microcomputer 16 controls the demultiplexer 10 so that the incoming multi-program transport stream is demultiplexed to produce a single program transport stream of the selected program. The parser 11 separates the single program transport stream into PSI packets and video/audio transport packets having the PID of the selected program. Also, the parser 11 removes the header of each transport packet and collects the payload of each transport packet to constitute PES (Packetized Elementary Stream) packets. The PES packets are stored in the buffer memory 12.

If the size of the PES packets stored in the buffer memory 12 reaches a predefined limit, the microcomputer 16 records the PES packets on the hard disk drive 13. All types of PES packets might be stored in a file or video, audio, and PSI transport packets might be stored in separate files according to their types.

The PES packets stored in the buffer memory 12 are sequentially provided to the decoder 15 in order of storage under the control of the microcomputer 16. The decoder 15 classifies the PES packets according to their picture types using the header information of each of the PES packets and decodes each PES packet accordingly. In other words, an I-picture is decoded with no additional data, a P-picture is decoded with reference to a preceding I-picture, and a B-picture is decoded with reference to both I- and P-pictures.

While decoding each input picture, the decoder 15 requests the index file creator 17 to create an index file on the hard disk drive 13 and creates a picture information entry containing the type of the decoded picture and position information on the picture. The position information comprises the size of all the data received since the decoder 15 started decoding and the start address of a PES packet containing the picture. The size of received data corresponds to the address of the picture within the recorded program. Each time a picture is decoded, a picture information entry regarding the picture is created by the decoder 15. The created picture information entries are transmitted to the index file creator 17 to be written into the created index file.

When receiving the first picture information entry after a new recording session begins, the index file creator 17 creates an index file having a predefined name in the buffer memory 12 or on the hard disk drive 13 and stores the received picture information entry in the index file. The created index file remains open throughout the recording session so that incoming picture information entries may be stored in the file. In case the type of a received picture is a B-picture, the index file creator 17 may not store the picture information entry for the picture in the index file because B-pictures are not used in low-speed playback modes in accordance with the present invention.

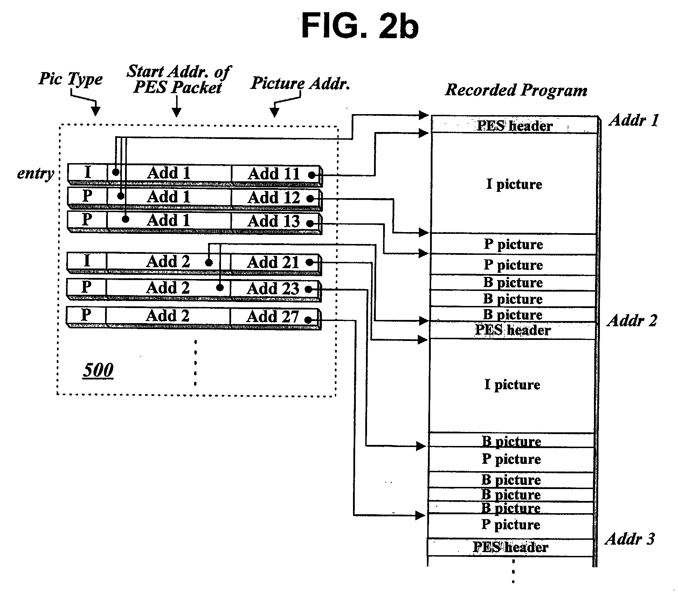

FIGS. 2a and 2b depict relationship between a recorded program and two possible index files for the program. While the index file in FIG. 2a contains picture information entries of all types of pictures, the index file in FIG. 2b does not contain picture information entries for B-pictures.

A user may request various playback modes while the broadcast receiver outputs a selected program and simultaneously creates an index file 500 as shown in FIG. 2. Assume that the index file 500 contains picture information entries of all type of pictures as in FIG 2a. For example, if the user issues a request for fast rewind to the position of 1 minute ago and 1/6 x speed playback from the position, the microcomputer 16 scans the index file 500 for the picture information entry pointing to the picture of the desired position, starting from the latest picture information entry.

In the case where the program contains 30 frames/sec, the wanted picture information entry is the 1800th (60 x 30) entry backward from the last one. Similarly, in the case where the program contains 25 frames/sec, the wanted picture information entry is the 1500th (60 x 25) entry backward from the last one. If the wanted picture information entry is detected, the microcomputer 16 begins playback of the recorded program from the picture pointed to by the detected entry or a next picture.

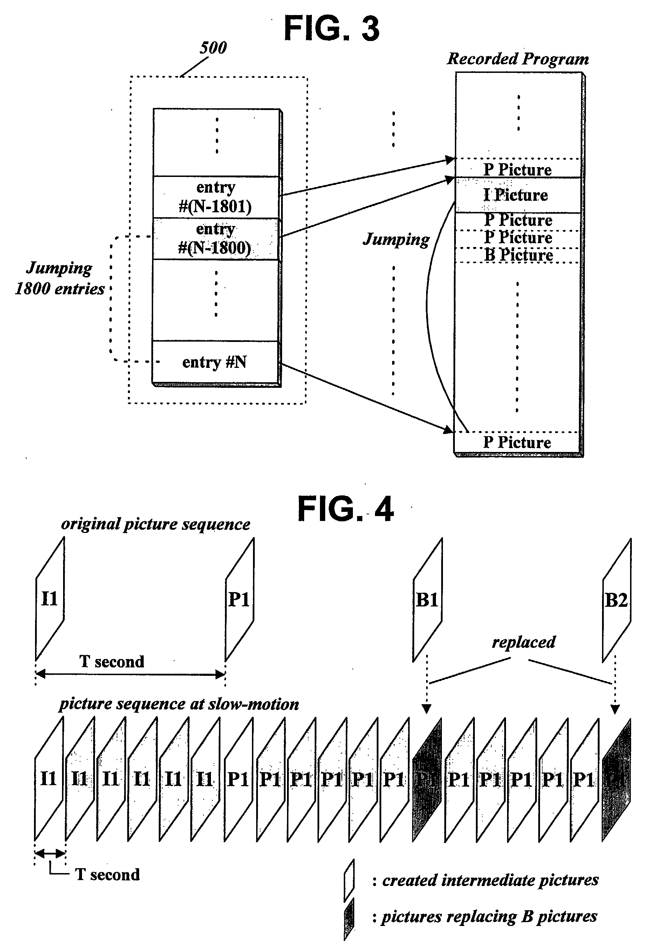

FIG. 3 illustrates the procedure in the above example. The microcomputer 16 examines if the detected picture information entry pertains to an I-picture. If not, the microcomputer 16 searches for a picture information entry for the next I-picture and reads the position information contained in the entry, i.e., the picture address and the start address of the PES packet carrying the I-picture. Then, the microcomputer 16 loads a predefined amount of data, for example data for the whole PES packet, starting from the start address of the PES packet from the hard disk drive 13 into the buffer memory 12.

Consider the case that the index file does not contain picture information entries for B-picture as in FIG. 2b. If a user rewinds the recorded program to a certain position and then requests 1/6 x speed playback from the position, the microcomputer 16 searches the recorded program from the position for the start point of a PES packet. Once the start point of a PES packet is located, the microcomputer 16 scans the index file 500 for a picture information entry pointing to the located PES packet. Then, the microcomputer 16 loads a predefined amount of recorded data from the located position into the buffer memory 12.

Subsequently, the microcomputer 16 provides the data for a picture corresponding to the start address to the decoder 15. Because 1/6 x speed playback is requested, the microcomputer 16 inputs the picture data to the decoder 15 six times at intervals of 1/30 second. Instead of applying the same picture data repeatedly, the microcomputer 16 may provide the decoder 15 with information indicating that the whole or a part (several macro blocks) of the data to be decoded are identical to that of the previous picture, by which the computational burden on the decoder 15 and the data traffic between the microcomputer 16 and the decoder 15 may be reduced.

After outputting the same picture data 6 times to achieve the requested playback speed, the microcomputer 15 checks the next picture information entry. If the picture information entry points to a P-picture, the data for the P-picture is provided to the decoder 15 6 times at intervals of 1/30 second (or 1/25 second) as above. Receiving data for a P-picture, the decoder 15 builds a complete picture with reference to the preceding I-picture that was received and stored earlier.

In case of FIG. 2a, if the next picture information entry is for a B-picture, the microcomputer 15 skips next picture information entries until a picture information entry for an I-picture or a P-picture is encountered. Suppose that N picture information entries are skipped. Because the program is to be played at 1/6x speed, 6N intermediate pictures should be inputted to the decoder 15 instead of the skipped N B-pictures. The microcomputer 16 uses a P-picture immediately preceding the first skipped B-picture as the intermediate pictures. FIG. 4 shows an exemplary sequence of pictures to be decoded according to this method.

In case of FIG. 2b, information on B-pictures does not exist. The microcomputer 15, therefore, detects the number of all the pictures contained in the PES packet from the header of the PES packet and calculates the number of B-pictures contained in the PES packet by subtracting the detected number from the number of picture information entries created for the PES packet. The position of each B-picture can be detected based on the start address and size of each picture in the picture information entry.

Because B-pictures are not used for low-speed playback in the aforementioned embodiment, it is unnecessary for the decoder 15 to store P-pictures and to refer to P-pictures for decoding B-pictures. As a result, the buffer space of a decoder is saved and computational burden is also alleviated.

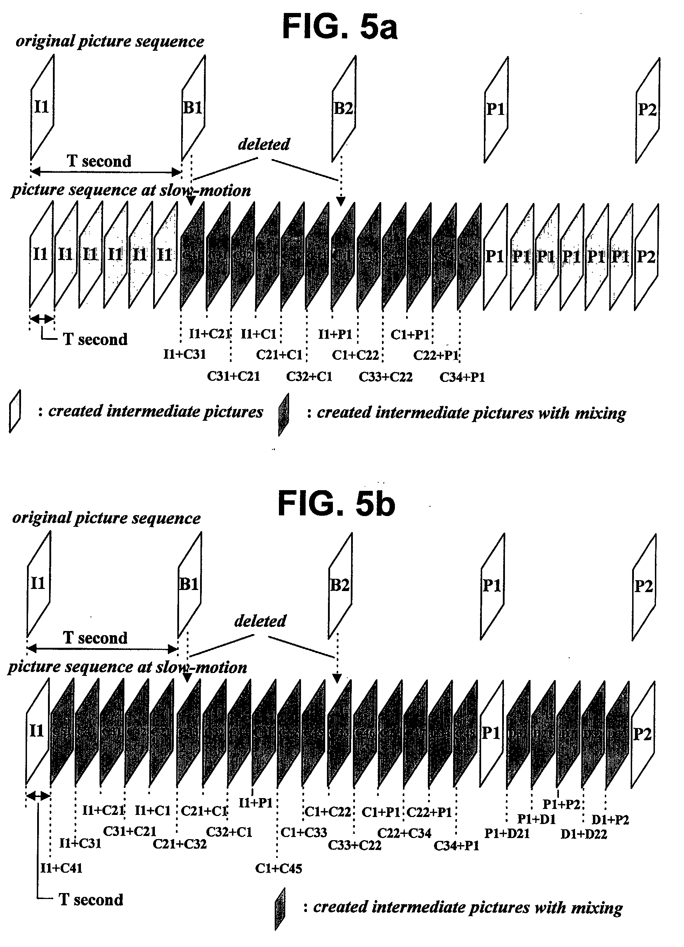

Instead of using the picture immediately preceding B-pictures as immediate pictures, immediate pictures may be constructed by combining pictures preceding and following B-pictures. FIG. 5 depicts an exemplary sequence of pictures when this method is adopted, which is explained below.

If 1/6 x speed playback is requested and the number of B-pictures to be skipped is 2, then 12 (6 x 2) immediate pictures are needed. The first immediate picture C1 is constructed by averaging the corresponding pixels of the two pictures (I1 and P1 in FIG. 5a) immediately preceding and following the B-pictures to be skipped. Then, the second immediate pictures C21 and C22 are constructed by using I1, C1, and P1. In a similar manner, the third immediate pictures C31 through C34 and the fourth immediate pictures C41 through C48 are constructed. Because the number of constructed immediate pictures exceeds the required number 12, the last three pictures C46, C47, and C48 are discarded.

The constructed 12 immediate pictures are sequentially inputted to the decoder 15 at intervals of 1/30 second. It is also possible to construct and insert immediate pictures between an I-picture and a P-picture or between two P-pictures. In this case, if 1/S x speed playback is required, (S-1) immediate pictures are to be created and inserted. FIG. 5b illustrates an exemplary sequence of pictures at 1/6 x speed playback in which B-pictures are removed and immediate pictures are inserted between every pair of successive non-B pictures.

In the above embodiment, computational burden decreases as B-pictures are not used and also smooth slow motions are attainable.

In the meantime, a received broadcast program may encode each field as a packet instead of encoding each frame as a packet, in which pictures for odd and even fields are received alternately. In this case, the intermediate pictures are inserted such that the number of resultant pictures remains even. If the sum of the number of original pictures, i.e., I-pictures or P-pictures and the number of added intermediate pictures is not even, the number of fields, which should be even, is not even, either.

If the requested playback speed is 1/(2n) x such as 1/2x, 1/4x, or 1/6x, the number of added intermediate pictures is even if they replace omitted B-pictures and is odd if they are added to original pictures such as I-pictures or P-pictures. Consequently, the number of pictures always remains even. However, if the requested playback speed is 1/(2n-1) x such as 1/3x, 1/5x, or 1/7x, an intermediate picture should be additionally inserted or discarded to maintain the number of pictures even.

In the above embodiments, the microcomputer 16 was responsible for creation of intermediate pictures. Alternatively, the decoder 15 may have a separate hardware unit in it for creating intermediate pictures for slow motions, in which case the microcomputer 16 informs the hardware unit of the required playback speed and address of each picture to be read from the buffer memory 12.

The method for implementing low-speed playback of a recorded program in accordance with the present invention provides several advantages such as reduced computations and smooth slow motions at very low playback speeds.

While the invention has been disclosed with respect to a limited number of embodiments, those skilled in the art, having the benefit of this disclosure, will appreciate numerous modifications and variations therefrom. It is intended that the appended claims cover all such modifications and variations as fall within the true spirit and scope of the invention.

## Claims

1. A method for low-speed playback of a broadcast program in a digital broadcast receiver capable of recording received broadcast programs, comprising the steps of:
(a) decoding and outputting a received broadcast program consisting of MPEG-encoded I-, P-, and B-pictures while recording the received broadcast program;
(b) extracting, in response to a request for low-speed playback, only I- and P-pictures from the recorded program, beginning from a start position of the requested playback;
(c) creating and inserting intermediate pictures between the extracted pictures, the number of the created intermediate pictures being dependent on the requested playback speed; and
(d) decoding and outputting the stream of the extracted pictures the inserted intermediate pictures have been inserted into.

2. The method of claim 1, wherein said step (a) further conducts an operation of storing a picture information entry for each picture in a file, the picture information entry for a picture comprising an address of the picture on a recording medium and the type of the picture.

3. The method of claim 2, wherein said step (b) searches for the start position of the requested low-speed playback with reference to the picture information entry for each picture and constructs alternative pictures to replace B-pictures with reference to the type information contained in each picture information entry.

4. The method of claim 2, wherein said step (b) stores picture information entries for only I- and P-pictures in a file.

5. The method of claim 1, wherein said step (b) inserts a non-B-picture preceding each B-picture to replace said each B-picture contained in the recorded broadcast program.

6. The method of claim 1, wherein said step (b) constructs an alternative picture using non-B-pictures preceding and following a B-picture and inserts the constructed alternative picture to replace the B-picture contained in the recorded broadcast program.

7. The method of claim 6, wherein said alternative picture is constructed by averaging each corresponding pixels of the non-B-pictures preceding and following the B-picture.

8. The method of claim 1, wherein, in said step (c), the number of inserted intermediate pictures is odd.

9. The method of claim 1, wherein said step (c) creates a first intermediate picture using two adjacent pictures in said step (b), creates a second intermediate picture using the first intermediate picture and one of the adjacent pictures and another second intermediate picture using the first intermediate picture and the other one of the adjacent pictures, and, in the same manner, creates third and fourth intermediate pictures as many as required.

10. The method of claim 9, wherein said intermediate picture is constructed by averaging each corresponding pixels of the two pictures between which the intermediate picture is to be inserted.

11. The method of claim 1, wherein said step (c) creates said intermediate picture such that said intermediate picture to be inserted after a picture are identical to the picture.

12. The method of claim 11, wherein said intermediate picture includes information indicating that said intermediate picture is identical to the whole or part of the preceding picture.

13. The method of claim 1, wherein said step (b) searches for an I-picture from the start position of the requested playback if a picture corresponding to the start position is not an I-picture, extracts only I- and P-pictures beginning from the position of the found I-picture, and constructs alternative pictures to replace B-pictures,.
